# EUROPÄISCHE PATENTSCHRIFT

(11) **EP 3 310 614 B1**
(45) Veröffentlichungstag und Bekanntmachung des Hinweises auf die Patenterteilung: **01.05.2019**
(21) Anmeldenummer: 16731109.1
(22) Anmeldetag: 17.06.2016
(51) Int. Cl.: B60N 2/56

(54) **VERFAHREN UND VORRICHTUNG ZUM BETREIBEN EINER SITZBELÜFTUNGSEINRICHTUNG, SITZBELÜFTUNGSEINRICHTUNG**
METHOD AND DEVICE FOR OPERATING A SEAT VENTILATION DEVICE, SEAT VENTILATION DEVICE
PROCÉDÉ ET DISPOSITIF PERMETTANT DE FAIRE FONCTIONNER UN DISPOSITIF DE VENTILATION DE SIÈGE ET DISPOSITIF DE VENTILATION DE SIÈGE

(30) Priorität: 17.06.2015 DE 102015211116
(43) Veröffentlichungstag der Anmeldung: 25.04.2018
(73) Patentinhaber: Volkswagen Aktiengesellschaft, 38440 Wolfsburg (DE)
(72) Erfinder: GRÜNEWALD, Marek, 38458 Velpke (DE); HELMOLD, Jörg, 38704 Liebenburg (DE)
(86) Internationale Anmeldenummer: PCT/EP2016/064022
(87) Internationale Veröffentlichungsnummer: WO 2016/202990

(56) Entgegenhaltungen:
- WO-A1-2015/042795
- DE-A1-102012 221 415
- US-A1- 2007 234 742

## Beschreibung

Die Erfindung betrifft ein Verfahren zum Betreiben einer Sitzbelüftungseinrichtung, die wenigstens ein Gebläse und wenigstens eine in einer Sitzoberfläche angeordnete und mit dem Gebläse lufttechnisch verbundene Belüftungsöffnung aufweist, wobei das Gebläse zum Einstellen einer Soll-Drehzahl angesteuert wird, und wobei die Soll-Drehzahl in Abhängigkeit von einem aktuellen Zustandswert des Gebläses, der von einem durch das Gebläse geförderten Volumenstrom abhängt, angepasst wird.

Ferner betrifft die Erfindung eine Vorrichtung zum Betreiben einer Sitzbelüftungseinrichtung, die wenigstens ein Gebläse und wenigstens eine in einer Sitzoberfläche angeordnete und mit dem Gebläse lufttechnisch verbundene Belüftungsöffnung aufweist, mit einem Steuergerät zum Betreiben des Gebläses. Weiterhin betrifft die Erfindung eine Sitzbelüftungseinrichtung mit einer derartigen Vorrichtung.

Aus dem Stand der Technik sind Verfahren, Vorrichtungen und Sitzbelüftungseinrichtungen der eingangs genannten Art bereits bekannt. So offenbart beispielsweise die Offenlegungsschrift DE 10 2012 221 415 A1 eine Sitzbelüftungseinrichtung mit einem in einem Sitz angeordneten Gebläse, das mit mehreren in einer Sitzfläche ausgebildeten Belüftungsöffnungen lufttechnisch verbunden ist, sodass durch das Gebläse ein Volumenstrom zu den Belüftungsöffnungen und durch diese hindurch beispielsweise zur Klimatisierung eines Fahrzeugs oder einer auf dem Sitz befindlichen Person gefördert wird. Derartige Sitzbelüftungseinrichtungen dienen dazu, dem Passagier zusätzlichen Komfort zu verschaffen. Das Gebläse wird dabei durch eine Vorrichtung elektrisch/elektronisch angesteuert, um beispielsweise einen gewünschten Volumenstrom einzustellen. Sobald sich eine Person auf dem Sitz befindet, wird jedoch ein Gegendruck, der auf das Gebläse wirkt, aufgrund der durch die Person teil- oder vollständig bedeckten Belüftungsöffnung erhöht, sodass sich der tatsächlich geförderte Volumenstrom verändert. Bei der in der zuvor genannten Offenlegungsschrift vorgestellten Belüftungseinrichtung führt dies dazu, dass die Drehzahl des Gebläses abnimmt, und der Betriebsstrom des Gebläses beziehungsweise eines Motors des Gebläses steigt an. Anders herum, wenn sich die Person von dem Sitz entfernt, steigt die Drehzahl an und der Betriebsstrom sinkt. Mit zunehmender Drehzahl nimmt jedoch auch eine Geräuschemission des Gebläses zu. Daher ist in der genannten Druckschrift vorgesehen, in Abhängigkeit von einem Betriebsstrom oder einer aktuellen Drehzahl des Gebläses und zwei vorgebbaren Schwellenwerten zu ermitteln, ob der die Sitzbelüftungseinrichtung aufweisende Sitz belegt oder unbelegt ist, und dann beispielsweise bei unbelegtem Sitz die Drehzahl zu verringern oder den Motor ganz auszuschalten, um störende Geräusche zu vermeiden.

Der Erfindung liegt die Aufgabe zugrunde, ein Verfahren sowie eine Vorrichtung und eine Sitzbelüftungseinrichtung zu schaffen, die auf kostengünstige Art und Weise eine optimale Belüftungsfunktion bei vorteilhaftem Geräuschverhalten gewährleisten, insbesondere dann, wenn als Antriebsmotor für das Gebläse ein bürstenloser Gleichstrommotor verwendet wird.

Die der Erfindung zugrundeliegende Aufgabe wird durch ein Verfahren mit den Merkmalen des Anspruchs 1 gelöst. Das erfindungsgemäße Verfahren hat den Vorteil, dass die Drehzahl der Sitzbelüftungseinrichtung beziehungsweise des Gebläses kennfeldgeregelt wird, sodass eine kontinuierliche Anpassung der Drehzahl an einen auf das Gebläse wirkenden Gegendruck unter Berücksichtigung zulässiger Geräuschemissionen erfolgt. Erfindungsgemäß wird dies dadurch erreicht, dass die angepasste Drehzahl aus einem Kennfeld in Abhängigkeit von dem aktuellen Zustandswert ausgewählt wird, wobei das Kennfeld in Abhängigkeit eines vorgebbaren Akustikgrenzwertes erstellt wird oder wurde. Das Verfahren umfasst somit einen Teil, der zeitlich vor der Inbetriebnahme der Sitzbelüftungseinrichtung zu erfolgen hat, nämlich die Erstellung des Kennfeldes. Dazu wird das tatsächliche Geräuschverhalten des Gebläses zu unterschiedlichen Bedingungen, insbesondere bei unterschiedlichen Gegendrücken, in Bezug auf die Geräuschemissionen untersucht und das Ergebnis in dem Kennfeld hinterlegt, sodass die hinterlegten Daten beim eigentlichen Betrieb der Sitzbelüftungseinrichtung dazu verwendet werden können, das Gebläse in einem optimalen Betriebsbereich bezogen auf den geförderten Volumenstrom und die erzeugten Geräuschemissionen, die sich durch einen messbaren Akustikwert auszeichnen, betrieben wird.

Gemäß einer bevorzugten Weiterbildung der Erfindung ist vorgesehen, dass zur Erstellung des Kennfeldes das Gebläse zum Einstellen der vorgegebenen Soll-Drehzahl angesteuert und der geförderte Volumenstrom durch Verändern eines auf das Gebläse wirkenden Gegendrucks mehrmals variiert wird, wobei jeweils ein Akustikwert des Gebläses gemessen und die Drehzahl derart angepasst wird, dass der gemessene Akustikwert einen vorgebbaren Akustikgrenzwert nicht überschreitet. Zur Erstellung des Kennfeldes wird also der auf das Gebläse wirkende Gegendruck variiert, also erhöht oder verringert, und die sich dadurch ergebenden Auswirkungen auf die Geräuschemissionen durch Ermitteln des mit dieser Variation eingestellten Akustikwertes ermittelt. Somit können für unterschiedliche Gegendrücke oder unterschiedliche Volumenströme des Gebläses unterschiedliche Akustikwerte ermittelt werden. In Abhängigkeit des jeweiligen Akustikwertes in Bezug auf den vorgebbaren Akustikgrenzwert, kann dann jeweils die Drehzahl derart angepasst werden, dass der jeweils erfasste Akustikwert den vorgebbaren Akustikgrenzwert nicht überschreitet. Dadurch wird erreicht, dass unabhängig von dem Gegendruck stets der gewünschte Akustikgrenzwert eingehalten und Geräuschemissionen somit auf einem zulässigen Niveau gehalten werden. Weil sich der Gegendruck auf den erfassten Zustandswert des Gebläses auswirkt, lässt sich zu den ermittelten Zustandswerten bei den verschiedenen Gegendruckvariationen entsprechend zulässige Drehzahlen zuordnen, die die Bedingung des Akustikgrenzwertes erfüllen. Auf diese Weise lässt sich das Kennfeld einfach erstellen.

Bevorzugt ist weiterhin vorgesehen, dass zur Herstellung des Kennfeldes die Drehzahl derart angepasst wird, dass die erfassten Akustikwerte jeweils dem vorgegebenen Akustikgrenzwert entsprechend. Diese Ausführungsform sieht somit vor, dass die Drehzahl des Gebläses beziehungsweise des Motors des Gebläses nicht auf einen Maximalwert begrenzt wird, sondern dass die Drehzahl auf einen Wert eingestellt wird, bei welchem der maximal zugelassene Akustikwert erreicht ist. Dadurch wird sichergestellt, dass in jedem Gegendruck-Zustand des Gebläses der maximal mögliche Volumenstrom durch das Gebläse gefördert wird. Dadurch wird ein optimales Verhältnis zwischen Geräuschemission und gefördertem Volumenstrom beziehungsweise Belüftungsleistung erreicht.

Weiterhin ist bevorzugt vorgesehen, dass zum Erstellen des Kennfeldes der Gegendruck kontinuierlich oder stufenweise erhöht wird. Bei einer kontinuierlichen Erhöhung des Gegendrucks wird ein Kennfeld bereitgestellt, das eine besonders hohe Auflösung aufweist, die im Betrieb eine besonders genau Anpassung der Drehzahl an den jeweils vorliegenden Gegendruck erlaubt. Zweckmäßigerweise wird entsprechend der Akustikwert des Gebläses kontinuierlich ermittelt. Wird der Gegendruck alternativ stufenweise zur Erstellung des Kennfeldes erhöht, so bestimmt die Anzahl der Stufen die Auflösung des Kennfeldes und damit die Genauigkeit des Verfahren beim Betreiben der Sitzbelüftungseinrichtung. Durch die stufenweise Erhöhung lässt sich jedoch die Datenmenge verringern, sodass das Verfahren weniger rechenaufwändig wird. Bei dem Auslesen des Kennfelds werden dann bevorzugt Interpolationswerte für Zwischenwerte berechnet. Selbstverständlich kann zum Erstellen des Kennfelds der Gegendruck auch stufenweise oder kontinuierlich verringert werden.

Gemäß einer bevorzugten Weiterbildung der Erfindung ist vorgesehen, dass zur Erstellung des Kennfeldes dem aktuell gemessenen Akustikwert der aktuelle Zustandswert des Gebläses zugeordnet und zusammen mit dem Akustikwert in dem Kennfeld gespeichert wird. Somit ergibt sich eine einfache und nachvollziehbare Zuordnung von Zustandswerten, Akustikwerten und angepassten Drehzahlen in dem Kennfeld.

Weiterhin ist bevorzugt vorgesehen, dass als Zustandswert ein Betriebsstrom eines Elektromotors, insbesondere eines bürstenlosen Gleichstrommotors des Gebläses ermittelt oder gemessen wird. Wie eingangs bereits erläutert, verändert sich der Betriebsstrom in Abhängigkeit von dem auf das Gebläse wirkenden Gegendruck. Somit kann in Abhängigkeit des aktuell erfassten Betriebsstroms auf den vorliegenden Gegendruck geschlossen werden. Tatsächlich ist jedoch ein Ermitteln des Gegendrucks bei dem vorliegend beschriebenen Verfahren nicht notwendig, weil bevorzugt direkt in Abhängigkeit des erfassten Betriebsstroms durch Nutzung des vorteilhaften Kennfeldes die Drehzahl derart angepasst wird, dass ein maximaler Volumenstrom unter Einhaltung des Akustikgrenzwertes erzielt wird.

Die erfindungsgemäße Vorrichtung mit den Merkmalen des Anspruchs 7 zeichnet sich dadurch aus, dass das Steuergerät speziell dazu hergerichtet ist, das erfindungsgemäße Verfahren durchzuführen. Es ergeben sich hierdurch die bereits genannten Vorteile. Insbesondere weist das Steuergerät Mittel zum Erfassen des aktuellen Zustandswertes, insbesondere des Betriebsstroms des Elektromotors, sowie einen nicht flüchtigen Speicher zum Hinterlegen des Kennfeldes auf. Weitere Merkmale und Vorteile ergeben sich aus dem zuvor Beschriebenen sowie aus den Ansprüchen.

Die erfindungsgemäße Sitzbelüftungseinrichtung mit den Merkmalen des Anspruchs 8 zeichnet sich durch die erfindungsgemäße Vorrichtung aus. Es ergeben sich hierdurch die bereits genannten Vorteile.

Im Folgenden soll die Erfindung anhand eines Ausführungsbeispiels näher erläutert werden. Dazu zeigen
- Figur 1: eine vorteilhafte Vorrichtung zum Betreiben der Sitzbelüftungseinrichtung in einer vereinfachten Darstellung,
- Figur 2: ein Verfahren zur Erstellung eines vorteilhaften Kennfeldes als Flussdiagramm,
- Figur 3: das Verhalten einer Sitzbelüftungseinrichtung mit einem bürstenlosen Gleichstrommotor,
- Figur 4: eine Geräuschentwicklung der Sitzbelüftungseinrichtung und
- Figur 5: eine vereinfachte Darstellung einer Funktion des Steuergeräts.

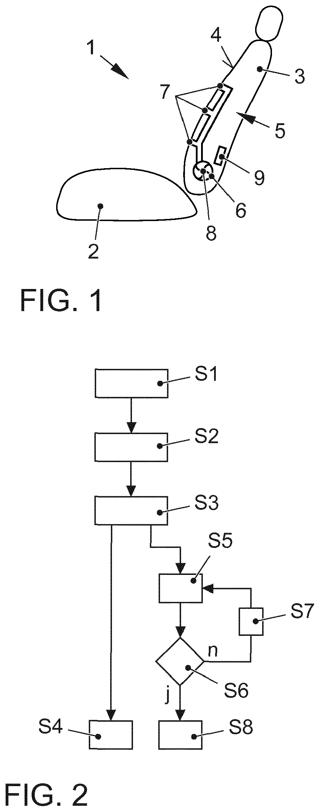

Figur 1 zeigt in einer vereinfachten Darstellung einen Fahrzeugsitz 1 eines hier nicht näher dargestellten Kraftfahrzeugs, der ein Sitzteil 2 sowie eine Rückenlehne 3 aufweise. Das Sitzteil 2 und die Rückenlehne 3 weisen jeweils eine Sitzoberfläche 4 auf, mit welcher ein Passagier in Kontakt kommt, wenn er sich auf den Fahrzeugsitz 1 setzt.

In die Rücklehne 3 integriert ist eine Sitzbelüftungseinrichtung 5, die ein Gebläse 6 sowie mehrere in der Sitzoberfläche 4 der Rücklehne 3 ausgebildete/angeordnete Belüftungsöffnungen 7 umfasst, die durch Luftleitungen in der Rückenlehne 3 lufttechnisch mit dem Gebläse 6 verbunden sind. Das Gebläse 6 weist zweckmäßigerweise einen Elektromotor 8 zu seinem Antrieb auf, der durch ein Steuergerät 9 betrieben wird. Das Gebläse 6 ist vorliegend als Radiallüfter und der Elektromotor 8 als bürstenloser Gleichstrommotor ausgebildet. Hierdurch wird ein vorteilhafter Kompromiss zwischen benötigtem Bauraum, Kosten und Leistung der Sitzbelüftungseinrichtung 5 erreicht.

Selbstverständlich ist es auch möglich, dass das Gebläse 6 oder die Sitzbelüftungseinrichtung 5 insgesamt nur in dem Sitzteil 2 oder in dem Sitzteil 2 und in der Rückenlehne 3 angeordnet ist. Die Sitzbelüftungseinrichtung 5 kann dabei im Schaum des Fahrzeugsitzes 1 direkt verbaut und mit einem Vließ verklebt sein. Auch kann die Sitzbelüftungseinrichtung 5 in dem Schaum mit Gummibändern zur akustischen Entkopplung aufgehangen werden. Weiterhin ist es denkbar, ein Luftverteilergehäuse zu verwenden, das zwischen dem Schaum und der Sitzstruktur angeordnet ist. Weiterhin kann die Sitzbelüftungseinrichtung 5, insbesondere das Gebläse 6, auf der Rückseite einer Massage- oder Lordosenplatte angeordnet sein. Auch kann die Sitzbelüftungseinrichtung 5 außerhalb des Fahrzeugsitzes 1 an diesem oder an einem Karosserieteil des den Fahrzeugsitz 1 aufweisenden Kraftfahrzeugs angeordnet sein.

Durch die Sitzbelüftungseinrichtung 5 soll der Fahrkomfort für eine auf dem Sitz 1 befindliche Person oder auch für andere Personen desselben Kraftfahrzeugs erhöht werden. Zum einen kann eine auf dem Fahrzeugsitz 1 befindliche Person durch die Sitzbelüftungseinrichtung 5 direkt belüftet und klimatisiert werden, und zum anderen kann die Sitzbelüftungseinrichtung 5 auch allgemein zur Klimatisierung des Fahrzeugs genutzt werden. Dabei ist zu beachten, dass weder die auf dem Fahrzeugsitz 1 befindliche Person und noch andere Personen durch eine Geräuschentwicklung des Gebläses 6 unangenehm in ihrem Komfort eingeschränkt werden. Im Betrieb fördert das Gebläse 6 einen Volumenstrom durch die Luftleitkanäle zu den Belüftungsöffnungen 7. Befindet sich eine Person auf dem Fahrzeugsitz 1, so werden die Belüftungsöffnungen vollständig oder teilweise durch die Person bedeckt, sodass ein Gegendruck, der lufttechnisch auf das Gebläse 6 wirkt, erhöht und der Volumenstrom zunächst verringert wird. Dabei werden bei einem 95%-Mann, aufgrund seines höheren Gewichts, die Belüftungsöffnungen 7 durch eine Verformung der Rückenlehne 3 stärker zusammengedrückt als durch eine 5%-Frau. Den Gegendruck muss die Sitzbelüftungseinrichtung 5 überwinden, um die gewünschte Klimatisierung zu erreichen. Ein Gebläse ohne Drehzahlregelung liefert bei Gegendruck einen höheren Volumenstrom als ein Sitzlüfter mit Drehzahlregelung. Jedoch verschlechtert sich die Akustik, ausgelöst durch die Erhöhung der Drehzahl, was den Fahrkomfort verringern kann.

Um diese Nachteile zu überwinden, wird vorgeschlagen, die Sitzbelüftungseinrichtung 5 kennfeldgeregelt anzusteuern, um einen optimalen Kompromiss zwischen Akustik und gefördertem Volumenstrom zu erreichen.

Figur 2 zeigt dazu in einem vereinfachten Flussdiagramm ein Verfahren zur Erstellung eines vorteilhalten Kennfeldes KF, das zum Betreiben der Sitzbelüftungseinrichtung 5 dient.

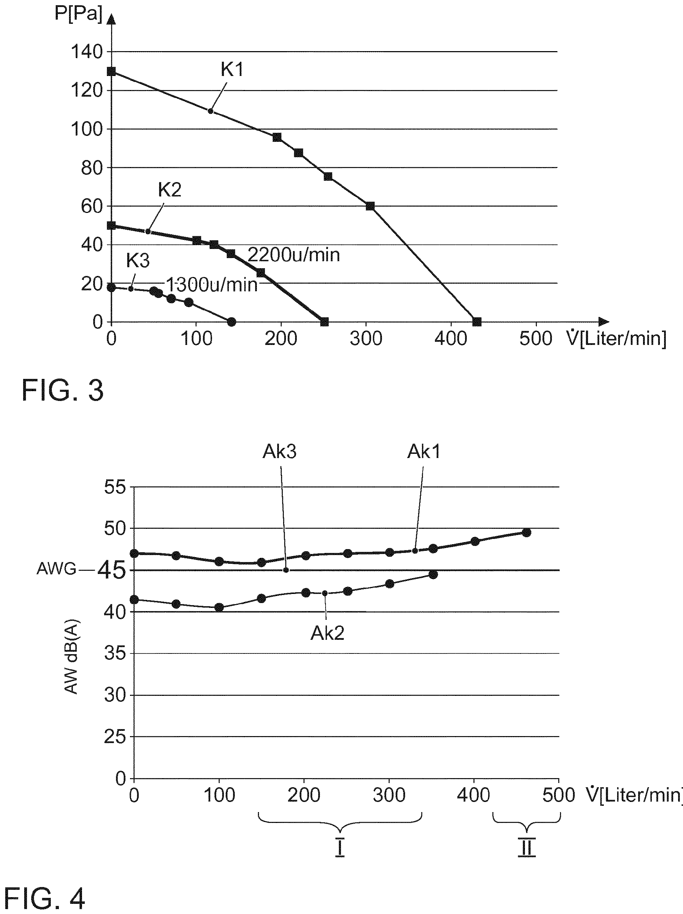

Eine aktuelle Drehzahl des bürstenlosen Gleichstrommotors 8 kann sensorlos durch die Erfassung der Gegenspannung in seinem Stator erfasst werden. Dieser Wert kann elektronisch ausgewertet werden und damit die Drehzahl unabhängig von einem auf das Gebläse 6 wirkenden Gegendruck konstant gehalten werden. Hierdurch ergeben sich die in Figur 3 beispielhaft dargestellten Kurven K1, K2, K3, die jeweils das Verhältnis von Gegendruck P zu Volumenstrom *V̇* bei konstanter Drehzahl zeigen, wobei die Drehzahl der Kurve K1 größer ist als die der Kurve K2, und die Drehzahl der Kurve K2 größer als die der Kurve K3. Die in Figur 3 dargestellten Werte sind lediglich beispielhaft zu verstehen.

In einem ersten Schritt S1 des Verfahrens in Figur 2 wird die Kennfelderstellung gestartet. Dazu wird der Elektromotor 8 in einem Schritt S2 angesteuert, um eine Soll-Drehzahl einzustellen. Vorliegend erfolgt dies ohne einen auf das Gebläse 6 wirkenden Gegendruck, der zusätzlich zu dem durch die Luftleitkanäle und die Belüftungsöffnungen 7 erzeugten Gegendruck wirkt. In einem Schritt S3 wird anschließend ein zusätzlicher Gegendruck eingestellt oder ein bereits vorliegender Gegendruck erhöht. Dadurch ändert sich der Betriebsstrom des Elektromotors 8. Das Verändern des Gegendruck auf einen anderen Gegendruckwert zeigt sich somit in einem veränderten Wert des Betriebsstroms, der insofern einen aktuellen Zustandswert des Elektromotors 8 darstellt. Dieser Zustandswert wird in dem Kennfeld in einem Schritt S4 als den Gegendruck kennzeichnenden Wert gespeichert. Gleichzeitig, oder zeitlich davor oder danach, wird bei dem eingestellten Wert des Gegendrucks aus Schritt S3 in einem darauffolgenden Schritt S5 ein aktueller Akustikwert des Gebläses 6 gemessen. Der erfasste Akustikwert wird in einem darauffolgenden Schritt S6 mit einem vorgebbaren Akustikgrenzwert, vorliegend von 45 Dezibel (A) verglichen. Ergibt der Vergleich, dass der erfasste Akustikwert den Akustikgrenzwert überschreitet (n), so wird in einem darauffolgenden Schritt S7 die Soll-Drehzahl des Gebläses 6 beziehungsweise des Elektromotors 8 verringert und der aktuelle Akustikwert erneut ermittelt. Diese Anpassung der Drehzahl erfolgt solange, bis der ermittelte Akustikwert den vorgegebenen Akustikgrenzwert nicht mehr überschreitet und insbesondere diesem entspricht (j). In diesem Fall wird in einem darauffolgenden Schritt S8 die angepasste Drehzahl, die zu dem zulässigen Akustikwert geführt hat, in demselben Kennfeld wie der Wert des Betriebsstroms hinterlegt und dem zuvor erfassten Wert des Betriebsstroms zugeordnet. Insbesondere werden der Betriebsstrom und die angepasste Drehzahl in eine Tabelle geschrieben.

Figur 4 zeigt sich die aus einer Akustikmessung ergebenden Kennlinien AK1, AK2 und AK3. Die Akustikkennlinie AK1 wurde mit einer statischen Drehzahl von vorliegend 4300 Umdrehungen pro Minute erfasst. Es ist ersichtlich, dass die erfassten Akustikwerte der Kennlinie AK1 deutlich oberhalb des vorgebbaren Akustikgrenzwertes von AWG=45 dB (A) liegen. Kennlinie AK2 ist insgesamt unterhalb des Akustikgrenzwertes AWG. Dadurch entsteht ein unnötiger Leistungsverlust. Kennlinie AK3 wurde durch das zuvor beschriebene Verfahren erzeugt, sodass die Drehzahl die unterschiedlichen Gegendrücke optimal an den Akustikgrenzwert AWG angepasst wurden, sodass unabhängig vom Gegendruck stets der maximal mögliche Volumenstrom unter Einhaltung der Akustikbedingung durch das Gebläse 6 gefördert wird.

Um den maximalen Volumenstrom *V̇* des Gebläses 6 bei sich ändernden Gegendruck und unter Beibehaltung der zulässigen Akustik zu erreichen, wird im Betrieb die Soll-Drehzahl in Abhängigkeit des Gegendrucks mit Hilfe des Kennfelds KF angepasst.

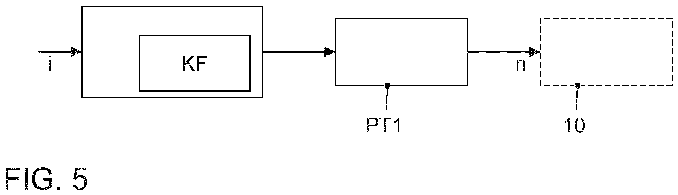

Figur 5 zeigt dazu in einer vereinfachten Darstellung eine von dem Steuergerät 9 durchgeführte Funktion. Im Betrieb wird zunächst der Betriebsstrom i gemessen. Dies kann durch eine geeignete elektronische Schaltung erfolgen, die beispielsweise in das Steuergerät 9 oder in den Antriebsmotor 8 integriert ist. Mit diesem Zustandswert ermittelt das Steuergerät 9 in regelmäßigen zeitlichen Abständen t zyklisch aus dem durch das zuvor beschriebene Verfahren erstellten Kennfeld KF insbesondere mit einer geeigneten Interpolation die angepasste Drehzahl n. Diese angepasste Drehzahl n wird bevorzugt über ein Verzögerungsglied PT1 an einen Motorregler 10 des Steuergeräts 9 oder des Antriebsmotors 8 übergeben. Durch eine Zeitkonstante T des Verzögerungsglieds kann bestimmt werden, wie schnell die Drehzahländerung erfolgen soll.

Durch diese vorgeschlagene Kennfeldregelung wird erreicht, dass unabhängig von einer Sitzbelegung oder unabhängig von einem auf das Gebläse 6 wirkenden Gegendruck, also sowohl bei belegtem Sitz gemäß Bereich I in Figur 4, als auch bei freiem Sitz gemäß Bereich II in Figur 4, stets ein maximaler Volumenstrom von dem Gebläse 6 unter Berücksichtigung des vorgegebenen Akustikgrenzwertes eingestellt wird.

## Patentansprüche

1. Verfahren zum Betreiben einer Sitzbelüftungseinrichtung (5), die wenigstens ein Gebläse (6) und wenigstens eine in einer Sitzoberfläche (4) angeordnete und mit dem Gebläse (6) lufttechnisch verbundene Belüftungsöffnung (7) aufweist, wobei das Gebläse (6) zum Einstellen einer Soll-Drehzahl angesteuert wird, und wobei die Soll-Drehzahl in Abhängigkeit von einem aktuellen Zustandswert (i) des Gebläses (6), der von einem durch das Gebläse (6) geförderten Volumenstrom (*V*) abhängt, angepasst wird, **dadurch gekennzeichnet, dass** die angepasste Drehzahl aus einem Kennfeld (KF) in Abhängigkeit von dem aktuellen Zustandswert (i) ausgewählt wird, wobei das Kennfeld (KF) in Abhängigkeit eines vorgebbaren Akustikgrenzwertes erstellt wird/wurde.

2. Verfahren nach Anspruch 1, **dadurch gekennzeichnet, dass** zur Erstellung des Kennfeldes (KF) das Gebläse (6) zum Einstellen der vorgegebenen Soll-Drehzahl angesteuert und der geförderte Volumenstrom (*V*) durch Verändern eines auf das Gebläse (6) wirkenden Gegendrucks (P) mehrmals variiert wird, wobei jeweils ein Akustikwert des Gebläses (6) gemessen und die Drehzahl derart angepasst wird, dass der gemessene Akustikwert einen vorgebbaren Akustikgrenzwert nicht überschreitet.

3. Verfahren nach einem der vorhergehenden Ansprüche, **dadurch gekennzeichnet, dass** zur Erstellung des Kennfeldes (KF) die Drehzahl derart angepasst wird, dass die erfassten Akustikwerte jeweils dem vorgegebenen Akustikgrenzwert entsprechen.

4. Verfahren nach Anspruch 2, **dadurch gekennzeichnet, dass** zur Erstellung des Kennfeldes (KF) der Gegendruck (P) kontinuierlich oder stufenweise erhöht wird.

5. Verfahren nach einem der vorhergehenden Ansprüche, **dadurch gekennzeichnet, dass** zur Erstellung des Kennfeldes (KF) dem aktuell gemessenen Akustikwert der Zustandswert des Gebläses (6) zugeordnet und zusammen mit dem Akustikwert in dem Kennfeld (KF) gespeichert wird.

6. Verfahren nach einem der vorhergehenden Ansprüche, **dadurch gekennzeichnet, dass** als Zustandswert ein Betriebsstrom (i) eines Elektromotors (8), insbesondere eines bürstenlosen Gleichstrommotors des Gebläses (6) ermittelt oder gemessen wird.

7. Vorrichtung zum Betreiben einer Sitzbelüftungseinrichtung (5), die wenigstens ein Gebläse (6) und wenigstens eine in einer Sitzoberfläche (4) angeordnete und mit dem Gebläse (6) lufttechnisch verbundene Lüftungsöffnung (7) aufweist, mit einem Steuergerät (9) zum Betreiben des Gebläses (6), **gekennzeichnet dadurch, dass** das Steuergerät (9) speziell dazu hergerichtet ist, das Verfahren nach einem der Ansprüche 1 bis 6 durchzuführen.

8. Sitzbelüftungseinrichtung (5) mit einer Vorrichtung nach Anspruch 7.

## Claims

1. Method for operating a seat ventilation device (5) which comprises at least one blower (6) and at least one ventilation opening (7) which is situated in a seat surface (4) and has an air-ventilation connection to the blower (6), wherein the blower (6) is controlled in order to set a setpoint rotational speed, and wherein the setpoint rotational speed is adapted as a function of a present state value (i) of the blower (6), which depends on a volumetric flow (*V*) conveyed by the blower (6), **characterized in that** the adapted rotational speed is selected from a characteristic map (KF) as a function of the present state value (i), wherein the characteristic map (KF) is/has been compiled as a function of a predefinable acoustic limiting value.

2. Method according to Claim 1, **characterized in that**, in order to compile the characteristic map (KF), the blower (6) is controlled in order to set the predefined setpoint rotational value and the conveyed volumetric flow (*V*) is varied several times by changing a counterpressure (P) acting on the blower (6), wherein, in each case, an acoustic value of the blower (6) is measured and the rotational speed is adapted in such a way that the measured acoustic value does not exceed a predefinable acoustic limiting value.

3. Method according to one of the preceding claims, **characterized in that**, in order to compile the characteristic map (KF), the rotational speed is adapted in such a way that the registered acoustic values each correspond to the predefined acoustic limiting value.

4. Method according to Claim 2, **characterized in that** the counterpressure (P) is continuously or incrementally increased in order to compile the characteristic map (KF).

5. Method according to one of the preceding claims, **characterized in that**, in order to compile the characteristic map (KF), the state value of the blower (6) is assigned to the presently measured acoustic value and is stored together with the acoustic value in the characteristic map (KF).

6. Method according to one of the preceding claims, **characterized in that** an operating current (i) of an electric motor (8), in particular a brushless DC motor of the blower (6), is determined or measured as the state value.

7. Device for operating a seat ventilation device (5), which comprises at least one blower (6) and at least one ventilation opening (7) which is situated in a seat surface (4) and has an air-ventilation connection to the blower (6), including a control unit (9) for operating the blower (6), **characterized in that** the control unit (9) is specifically designed for carrying out the method according to one of Claims 1 to 6.

8. Seat ventilation device (5) comprising a device according to Claim 7.

## Revendications

1. Procédé permettant de faire fonctionner un dispositif de ventilation de siège (5), qui présente au moins une soufflante (6) et au moins une ouverture de ventilation (7) disposée dans une surface du siège (4) et raccordée en écoulement d'air à la soufflante (6), dans lequel on commande la soufflante (6) pour le réglage d'un nombre de tours de consigne, et dans lequel on adapte le nombre de tours de consigne en fonction d'une valeur d'état actuelle (i) de la soufflante (6), qui dépend d'un courant volumique (V) transporté par la soufflante (6), **caractérisé en ce que** l'on choisit le nombre de tours adapté dans un diagramme caractéristique (KF) en fonction de la valeur d'état actuelle (i), dans lequel le diagramme caractéristique (KF) est/a été établi en fonction d'une valeur de limite acoustique pouvant être prédéfinie.

2. Procédé selon la revendication 1, **caractérisé en ce que** pour l'établissement du diagramme caractéristique (KF) on commande la soufflante (6) pour régler le nombre de tours de consigne prédéfini et on fait varier plusieurs fois le courant volumique transporté (V) en changeant une contrepression (P) agissant sur la soufflante (6), dans lequel on mesure à chaque fois une valeur acoustique de la soufflante (6) et on adapte le nombre de tours de telle manière que la valeur acoustique mesurée ne dépasse pas une valeur limite acoustique pouvant être prédéfinie.

3. Procédé selon l'une quelconque des revendications précédentes, **caractérisé en ce que** pour l'établissement du diagramme caractéristique (KF) on adapte le nombre de tours de telle manière que les valeurs acoustiques mesurées correspondent à chaque fois à la valeur limite acoustique prédéfinie.

4. Procédé selon la revendication 2, **caractérisé en ce que** pour l'établissement du diagramme caractéristique (KF) on augmente la contrepression (P) de façon continue ou échelonnée.

5. Procédé selon l'une quelconque des revendications précédentes, **caractérisé en ce que** pour l'établissement du diagramme caractéristique (KF) on associe la valeur d'état de la soufflante (6) à la valeur acoustique actuellement mesurée et on la mémorise avec la valeur acoustique dans le diagramme caractéristique (KF).

6. Procédé selon l'une quelconque des revendications précédentes, **caractérisé en ce que** l'on détermine ou on mesure comme valeur d'état un courant de fonctionnement (i) d'un moteur électrique (8), en particulier d'un moteur à courant continu sans collecteur de la soufflante (6).

7. Dispositif permettant de faire fonctionner un dispositif de ventilation de siège (5), qui présente au moins une soufflante (6) et au moins une ouverture de ventilation (7) disposée dans une surface du siège (4) et raccordée en écoulement d'air à la soufflante (6), avec un appareil de commande (9) pour faire fonctionner la soufflante (6), **caractérisé en ce que** l'appareil de commande (9) est spécialement conçu pour exécuter le procédé selon l'une quelconque des revendications 1 à 6.

8. Dispositif de ventilation de siège (5) comportant un dispositif selon la revendication 7.
